# EUROPÄISCHE PATENTSCHRIFT

(11) **EP 2 703 920 B1**
(45) Veröffentlichungstag und Bekanntmachung des Hinweises auf die Patenterteilung: **31.12.2014**
(21) Anmeldenummer: 12181891.8
(22) Anmeldetag: 27.08.2012
(51) Int. Cl.: G05B 19/409

(54) **Verfahren zum Einlernen der Steuerung einer Maschine**
Method for teaching a machine controller
Procédé d'apprentissage de la commande d'une machine

(43) Veröffentlichungstag der Anmeldung: 05.03.2014
(73) Patentinhaber: Siemens Aktiengesellschaft, 80333 München (DE)
(72) Erfinder: Jöhnßen, Oliver, 91058 Erlangen (DE)

(56) Entgegenhaltungen:
- EP-A1- 1 903 412
- EP-A1- 2 077 473
- EP-A2- 2 012 208
- DE-A1- 10 234 467
- DE-A1-102005 058 564
- DE-A1-102009 056 640

## Beschreibung

Die Erfindung betrifft ein Verfahren zum Einlernen der Steuerung einer Maschine und zur Steuerung dieser Maschine, wobei die Steuerung mittels einer insbesondere mobilen Bedieneinheit erfolgt.

Mobile Bedieneinheiten werden zur maschinennahen, sicherheitsgerichteten Bedienung von Maschinen, welche eine Mehrzahl an räumlich getrennt voneinander angeordneten Maschinenkomponenten aufweisen können, eingesetzt. Hierzu beinhalten die mobilen Bedieneinheiten entsprechende Sicherheitseinrichtungen, wie z.B. einen oder mehrere Zustimm-Taster und Not-Halt- oder STOP-Taster. Für die Einhaltung einer Sicherheitsvorschrift ist es erforderlich, eindeutig festzustellen, an welchem Ort sich ein die Bedieneinheit bedienender Bediener gerade befindet und mit welcher Blickrichtung er sich gerade zu einer bedienten Maschinenkomponente befindet. Beispielsweise ist das Bedienen einer Maschine bis zu einem Abstand von 5 m erlaubt. Bei einem größeren Abstand, bei dem beispielsweise kein Sichtkontakt der Maschine mehr gewährleistet ist, kann demgegenüber eine Bedienung nicht erfolgen. Häufig wird daher bei Überschreiten des maximalen Abstands die sicherheitsgerichtete Bedienung der Maschine unterbunden oder diese automatisch angehalten.

Bisher wurde ein maximaler Abstand zwischen dem Bediener und der Maschine dadurch begrenzt, dass die Länge einer Anschlussleitung, über die die mobile Bedieneinheit zur Steuerung mit der Maschine verbunden ist, den Aktionsradius der mobilen Bedieneinheit festlegt. Die grobe Abgrenzung über die Kabellänge ist dann nicht ausreichend, wenn sichergestellt sein soll, ob der Bediener während eines Bedienvorganges Blickkontakt zur Maschine hat.

Die Sicherstellung der Einhaltung von Sicherheitsvorschriften wird weiter erschwert, wenn das Bediengerät über eine drahtlose Kommunikationsverbindung mit der Maschine kommuniziert. Dies kann beispielsweise durch eine drahtlose Ortung der Bedieneinheit über Triangulation beim Vorhandensein mehrerer Sende-/Empfangsstationen erfolgen. Allerdings sind hierbei erzielbare Genauigkeiten für eine sicherheitsgerichtete Bedienung teilweise nicht hoch genug.

Ebenso kann eine passive Ortung über einen RFID-Transponder (Radio Frequency Identification) erfolgen. Ein RFID-Transponder der mobilen Bedieneinheit sendet zyklisch ein Signal aus, welches ein einer Maschinenkomponente zugeordnetes Lesegerät empfängt und moduliert mit einem Kennzeichner des Lesegeräts zurück an die Bedieneinheit sendet. Anhand des Kennzeichners des Lesegeräts kann die Bedieneinheit dann feststellen, welche Maschinenkomponente durch die Bedieneinheit gerade bedienbar ist. Allerdings ist diese Technologie anfällig aufgrund von Reflexionen, beispielsweise durch einen in der Nähe der Bedieneinheit fahrenden Gabelstapler oder metallische Gegenstände in der Nähe der Bedieneinheit.

Ein weiteres Problem besteht darin, dass bei drahtlosen Bedieneinheiten keine zuverlässige Reichweitenüberwachung möglich ist, so dass zur Begrenzung eines vorgegebenen Bedienbereichs zusätzlich Begrenzungen, wie z.B. Zäune und dergleichen, vorgesehen werden müssen. Eine Abstandsüberschreitung wird bei kabellosen Bedieneinheiten häufig zusätzlich mittels Trittmatten überwacht. Bewegt sich der Bediener der Bedieneinheit beispielsweise über den vorgegebenen Bedienbereich hinaus von der Maschine weg, so tritt er auf eine hier installierte Trittmatte, welche einer Steuerung der Maschine eine Bedienreichweitenüberschreitung signalisiert und diese beispielsweise automatisch anhält oder in einen Notbetrieb überführt.

Bevor eine Steuerung der Maschine mittels der mobilen Bedieneinheit möglich ist, muss für jede Maschinenkomponente der Maschine festgelegt werden, von welchem Bedienbereich diese mittels der mobilen Bedieneinheit bedienbar sein soll. Die entsprechenden Informationen werden in einer Steuerung der Maschine hinterlegt, so dass von einem Bedienbereich 1 lediglich die dem Bedienbereich 1 zugeordneten Maschinenkomponenten bedienbar sind, während alle anderen Maschinenkomponenten aus diesem Bedienbereich 1 heraus nicht bedienbar sind. Ein so erstelltes digitalisiertes Anlagenbild kann auch als Grundlage für das Navigieren in der Anlage und weiterer Zusatzfunktionen verwendet werden. Beispielsweise kann dem Bediener der schnellste Weg zu einer Störung an einem bestimmten Bedienbereich, zu einem Kollegen in der Anlage (beispielsweise bei Problemen), zu einer Materialausgabe (Ersatzteilausgabe für Beseitigung von Störungen oder Auffüllen von Betriebsmitteln) anhand von Pfeilen auf dem Display des Bediengerätes gezeigt werden. Ein derartiges Vorgehen ist z.B. von "Augmented Reality" bekannt. Die für die Navigation erforderlichen Informationen werden vor Inbetriebnahme der Maschine erstellt und mittels der Bedieneinheit verifiziert. Nach der Verifikation ist es möglich, die für den Betrieb der Maschine hinterlegten Funktionen, dem sicherheitsgerichteten Bedienen sowie gegebenenfalls weiterer Zusatzinformationen, zu nutzen.

Das Dokument EP 2 077 473 A1 betrifft ein Verfahren zur Freigabe der Bedienung von Automatisierungskomponenten einer technischen Anlage über ein mobiles Bediengerät, wobei in einer Einlernphase Sicherheitsbereiche innerhalb der Anlage sowie ihre Zuordnung zu den Messsignalen definiert und in einer Datenbank gespeichert werden, und in einer Bedienphase die Position des Bedieners bzw. des Bediengeräts in Bezug auf die Sicherheitsbereiche über Funkortung (z.B. RFID Tags), Ermittlung der absoluten geographischen Lage mit GPS-Koordinaten oder Bar-Code-Scannen erfasst wird und die Identität des Bedieners festgestellt wird. Eine Freigabe der Bedienung erfolgt in Abhängigkeit der Identität des Bedieners für alle Automatisierungskomponenten, die dem Sicherheitsbereich zugeordnet sind, in dem sich der Bediener bzw. das Bediengerät entsprechend der erfassten Position befindet.

Das Dokument EP 2 012 208 A2 betrifft ein Programmierhandgerät zum Programmieren eines Industrieroboters über Teach-In-Programmierung, wobei der Programmierhandgerät mit einer eingebauten Kamera ausgebildet ist und aufgrund der aufgenommenen Bilder die Position des Programmierhandgerätes berechnet wird. Basierend auf der berechneten Position wird die Position des vorgegebenen Punktes des Industrieroboters eingestellt bzw. definiert.

Das Dokument EP 1 903 412 A1 betrifft ein Verfahren zur Freigabe der Bedienung von Automatisierungskomponenten einer technischen Anlage über ein mobiles Bedien- und Beobachtungsgerät. Dabei empfängt das Bediengerät drahtlos eine erste Kennung einer an der Automatisierungskomponente angebrachten Transpondervorrichtung und ermittelt über die Sendung eines Trägersignals und den Empfang des modulierten Trägersignals den Abstand zur Transpondervorrichtung sowie eine funkermittelte Kennung. Falls der Abstand kleiner als ein vorgegebener Abstand und falls die funkermittelte Kennung der ersten Kennung entspricht, erfolgt die Freigabe der Bedienung der Automatisierungskomponenten.

Das Dokument DE 10 2009 056640 A1 betrifft ein Robotersystem mit einer Mehrzahl mechanischer Roboterteile, die dazu ausgeführt sind, unter Verwendung eines gemeinsamen Einlern-Handterminals betätigt zu werden. Jeder mechanische Roboterteil enthält eine Identifizierungs-Informationsanzeige, die auf eine visuell erkennbare Weise eine Identifizierungsinformation anzeigt. Das Robotersystem weist ferner ein Speichermittel für die registrierten Identifizierungsinformationen zum Speichern der Identifizierungsinformation als die registrierte Identifizierungsinformation, eine im Handterminal eingebaute Kamera zum Aufnehmen eines Bildes der Identifizierungs-Informationsanzeige des vom Bediener zu betätigenden mechanischen Roboterteils, ein IdentifizierungsinformationsErkennungsmittel zum Erkennen der Identifizierungsinformation aus dem aufgenommenen Bild und ein Komparatormittel zum Vergleichen der im Speichermittel für die registrierten Identifizierungsinformationen gespeicherten registrierten Identifizierungsinformation mit der erkannten Identifizierungsinformation auf. Die Roboter-Steuerungseinrichtung erkennt den aus der Mehrzahl mechanischer Roboterteile gewählten Teil auf Basis des Vergleichsergebnisses durch das Komparatormittel.

Das Dokument DE 10 2005 058564 A1 betrifft die Verwendung eines tragbaren Computers, um eine verbesserte drahtlose Unterstützung in einer Prozesssteuerungsumgebung bereitzustellen, wobei unter anderem eine automatische Identifizierung von Automatisierungskomponenten im Blickfeld des Bedieners offenbart wird, basierend auf einer Video- oder Bildverarbeitung der Videoeingabe, gesammelt vom Bilderzeugungsgerät z.B. eine eingebaute oder tragbare Kamera, wobei Merkmale der Automatisierungskomponenten oder darauf angebrachte alpha-nummerische Symbole erkannt werden. Eine Ermittlung der Position des tragbaren Computers wird zusätzlich mittels GPS ermittelt und zur Unterstützung der Identifizierung, wenn die Ergebnisse der Video- oder Bildverarbeitung nicht eindeutig sind.

Es ist Aufgabe der vorliegenden Erfindung, ein Verfahren anzugeben, mit dem das Einlernen der Steuerung einer Maschine und die Steuerung dieser Maschine, welche mittels einer Bedieneinheit steuerbar ist, funktional vereinfacht werden kann.

Diese Aufgabe wird gelöst durch ein Verfahren gemäß den Merkmalen des Patentanspruches 1. Vorteilhafte Ausgestaltungen ergeben sich aus den abhängigen Patentansprüchen.

Es wird ein Verfahren zum Einlernen der Steuerung einer Maschine und zur Steuerung dieser Maschine vorgeschlagen, wobei die Steuerung der Maschine mittels einer Bedieneinheit erfolgt. Die Maschine weist eine Anzahl an Maschinenkomponenten auf. Der Anzahl an Maschinenkomponenten ist jeweils eine eindeutige Ortsinformation und ein Bedienbereich zugeordnet, wobei ein Steuerbefehl, der von der Bedieneinheit an die Maschine übertragen wird, durch die Maschinenkomponente ausgeführt wird, wenn sich die Bedieneinheit bei der Übertragung des Steuerbefehls in dem Bedienbereich befindet. Die Vergabe der eindeutigen Ortsinformation und die Festlegung des jeweiligen Bedienbereichs können beispielsweise vorab der Durchführung des nachfolgend beschriebenen Verfahrens erfolgen.

Erfindungsgemäß werden die folgenden Schritte durchgeführt: Für jeden der vorgegebenen Bedienbereiche wird eine optische Information durch die Bedieneinheit erfasst. Die erfasste optische Information wird zusammen mit der zugeordneten Ortsinformation in einer Datenbank gespeichert, wobei die erfasste optische Information einen Identifikationsparameter für die zugeordnete Maschinenkomponente ausbildet.

Das erfindungsgemäße Vorgehen ermöglicht das Einlernen der Steuerung unter Nutzung eines optischen Systems, welches in der Bedieneinheit integriert ist. Die für jeden der vorgegebenen Bereiche zumindest eine erfasste optische Information kann im Betrieb der Maschine mit einer während oder zur Steuerung erfassten Bildaufnahme abgeglichen werden, wobei nur dann, wenn die in der zumindest einen optischen Information enthaltene Information sich auch in der während der Bedienung gemachten Aufnahme wiederfinden lässt, eine Bedienung möglich ist. Anhand der aufgefundenen optischen Entsprechung ist dann festgelegt, welche Maschinenkomponente gesteuert werden soll und gegebenenfalls welche weiteren Zusatzfunktionalitäten zur Verfügung stehen.

Der Schritt des Erfassens der optischen Information umfasst die Aufnahme eines oder mehrerer Bilder. Vorzugsweise erfolgt die Erfassung der zumindest einen optischen Information mit einer Kamera des Bediengeräts. Die Kamera kann beispielsweise auf einer von dem Bediener abgewandten Seitenfläche der Bedieneinheit vorgesehen sein. Geht man davon aus oder stellt man dies durch entsprechende konstruktive geometrische Merkmale der Bedieneinheit sicher, dass die Bedieneinheit bei der Bedienung in einer bestimmten Art und Weise durch den Bediener gehalten wird, so muss zum Bedienen der Maschine die Kamera der Bedieneinheit auf die zu bedienende Maschinenkomponente gerichtet sein, um die in der Datenbank hinterlegten optischen Informationen durch die Kamera erfassen zu können. Dieses Vorgehen stellt gleichzeitig sicher, dass eine Bedienung nur dann möglich ist, wenn ein Sichtkontakt zwischen dem Bediener und der Maschinenkomponente besteht.

Bei der Steuerung der Maschine mittels der Bedieneinheit können dann vermittels der Kamera der Bedieneinheit in zyklischen Abständen Aufnahmen gemacht und auf das Vorhandensein der optischen Information ausgewertet werden. Dreht sich der Bediener beispielsweise während eines Bedienvorganges von der zu steuernden Maschinenkomponente weg, so ist die erwartete optische Information nach der Drehung in den von der Bedieneinheit gemachten Aufnahmen nicht mehr auffindbar, so dass beispielsweise die sicherheitsgerichtete Bedienung unterbunden oder der Ablauf der Maschinenkomponente gestoppt oder unterbrochen werden kann.

Der Schritt des Erfassens der optischen Information erfolgt von zumindest einem Referenzpunkt aus. Vorzugsweise werden an zumindest zwei Referenzpunkten das oder die Bilder mit der Bedieneinheit aufgenommen. Vorzugsweise liegt ein jeweiliger Referenzpunkt auf einer Grenze des Bedienbereichs, wobei anhand der Bestimmung von Größenverhältnissen oder geometrischen Veränderungen der optischen Informationen die Grenzen des Bedienbereichs ermittelt werden können.

Zweckmäßigerweise werden ein erstes Bild von einem ersten Referenzpunkt, der einen minimalen Abstand des Bedienbereichs zur Maschinenkomponente repräsentiert, und ein zweites Bild von einem zweiten Referenzpunkt, der einen maximalen Bedienabstand des Bedienbereichs zur Maschinenkomponente repräsentiert, aufgenommen. Durch einen Vergleich der Größe der optischen Information in einer Aufnahme während eines Bedienvorgangs mit der Größe der optischen Information in dem ersten und zweiten Bild kann festgestellt werden, ob sich das Bediengerät während der Bedienung innerhalb des vorgegebenen Bedienbereichs oder außerhalb davon befindet. Es ist auch möglich, den Abstand des Bediengeräts zu der Maschine zu ermitteln.

Als optische Information kann z. B. ein 2- oder 3-dimensionaler sog. QR (Quick Response)-Code verarbeitet werden, der an der Maschine oder in der Nähe der Maschine angebracht ist. Der QR-Code kann nicht nur eine Information über den Ort der Maschine, sondern darüber hinaus auch weitere Informationen umfassen.

Als optische Information können alternativ oder zusätzlich ein oder mehrere Merkmale der Maschine oder von maschinenfremden Komponenten in der Umgebung der Maschine verarbeitet werden. Solche Merkmale können beispielsweise bestimmte Kanten der Maschine oder der Umgebung der Maschine sein. Insbesondere ist es hierdurch auf besonders einfache Weise möglich, einen Betrachtungswinkel der Bedieneinheit während einer Bedienung der Maschine festzustellen und zu ermitteln.

Zur Steuerung der Maschine wird zweckmäßigerweise durch die Bedieneinheit zumindest ein Bild der Maschine erfasst, wobei das Bild verarbeitet wird, um eine der optischen Informationen zu ermitteln, und wobei anhand der ermittelten optischen Information die Ortsinformation und die zugeordnete Maschinenkomponente ermittelt wird. Wie oben bereits beschrieben, ist es vorteilhaft, wenn in zyklischen Abständen Bilder der Maschine erfasst werden, um eine Bewegung des Bedieners außerhalb des Bedienbereichs oder einen unterbrochenen Sichtkontakt detektieren zu können.

Die Verarbeitung des zumindest einen Bildes kann wahlweise durch die Bedieneinheit oder einen Zentralrechner oder - einheit der Maschine überfolgen, an den das zumindest eine Bild zur Verarbeitung übertragen wird.

Mit Hilfe des vorgeschlagenen Verfahrens ist es möglich, ein digitales Abbild der (beliebig komplexen) Maschine in einer Datenbank abzubilden und zu speichern. Jeweilige Maschinenkomponenten, welche anhand von optischen Informationen identifizierbar sind, sind hierbei Zusatzfunktionen zuweisbar. Solche Zusatzfunktionen können beispielsweise das Routing zu einem Einsatzort, ortsabhängige Bedienberechtigungen für sicherheitsgerichtetes Bedienen oder das Einblenden von Zusatzinformationen wie Stör- und Warnmeldungen zur entsprechenden Maschinenkomponente sein.

Die dreidimensional erzeugbaren Daten der Maschine können entsprechend komprimiert abgelegt werden.

Das Bereithalten des digitalen Abbilds der Maschine zusammen mit optischen Informationen ermöglicht die Auswertung von Standortinformationen für den industriellen sicherheitsgerichteten Bedienvorgang. Hierbei kann auf herkömmliche drahtlose Kommunikationsmittel, wie z.B. Kommunikationsverbindungen über WLAN (Wireless Local Area Network), GSM (Global System for Mobile Communications) oder eine Ortung über GPS (Global Positioning System) verzichtet werden.

Das Verfahren lässt sich kostengünstig bereitstellen, da keine zusätzlichen Hardwarekomponenten, wie z.B. Transponder oder Kommunikationseinrichtungen, erforderlich sind. Die Möglichkeit, eine sicherheitsgerichtete Bedienung mittels eines optischen Systems durchführen zu können, weist eine hohe Störunanfälligkeit und eine hohe Genauigkeit auf.

Änderungen der Topologie der Maschine sind leicht erlernbar. Dadurch kann die Maschine problemlos erweitert werden.

Das Verfahren lässt sich in weitere Anwendungsfälle, wie z.B. die Ortung von Field PGs und die Navigation in der Maschine für Service-Einsätze, nutzen.

Das Verfahren lässt sich mit wenig leistungsfähigen Komponenten durchführen, da das Erlernen und die Verarbeitung der erlernten Informationen auf herkömmlichen Rechnern erfolgen können.

Bei der Nutzung eines derart eingerichteten Systems ist es möglich, eine Blickrichtung des Bedieners der Bedieneinheit zu erfassen und in die Steuerung mit einzubeziehen.

Die Erfindung wird nachfolgend näher anhand eines Ausführungsbeispiels in der Zeichnung erläutert. Es zeigen:

| | |
|---|---|
| FIG 1 | eine schematische Darstellung einer Maschine, deren Steuerung mit Hilfe einer Bedieneinheit eingelernt wird, |
| FIG 2 bis FIG 4 | von verschiedenen Referenzpunkten eines Bedienbereichs aufgenommene Bilder, und |
| FIG 5 | eine in einer Datenbank abgelegte Datenstruktur nach dem Einlernen. |

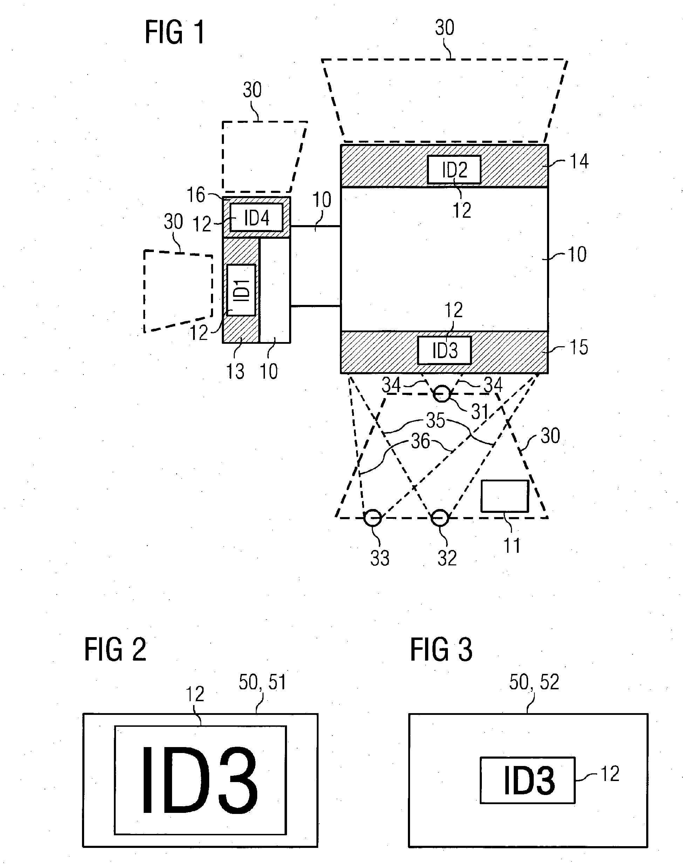

FIG 1 zeigt eine schematische Maschine 10, welche mittels einer mobilen Bedieneinheit 11 bedienbar ist. Bei der Maschine 10 kann es sich beispielsweise um eine Fertigungsanlage mit Greifern, Roboterarmen, Förderbändern und dergleichen handeln. Diese einzelnen Maschinenkomponenten, welche in FIG 1 mit dem Bezugszeichen 13 bis 16 schraffiert gekennzeichnet sind, werden aufgrund ihrer räumlichen Anordnung und/oder Ausdehnung von unterschiedlichen Bedienbereichen 30 über die Bedieneinheit 11 bedient.

Die Bedieneinheit 11 umfasst in einer nicht näher dargestellten Weise ein Bedienmittel, wie z.B. Zustimm-Taster oder Not-Halt-Taster. Darüber hinaus kann die Bedieneinheit weitere Bedienelemente, wie z.B. eine Tastatur, einen Touch-Screen usw. aufweisen. Ebenso kann optional ein Display oder eine Mehrzahl von Leuchten vorgesehen sein, um den Bediener der Bedieneinheit einen bestimmten Zustand und dergleichen zu signalisieren. Darüber hinaus umfasst die Bedieneinheit 11 zumindest eine Kamera, mit der während der Bedienung der Maschine 10 Bilder aufnehmbar und verarbeitbar sind.

Wie bei industriellen Anlagen üblich, wird ein Steuerbefehl für die Maschine 10 oder eine bestimmte Maschinenkomponente 13, 14, 15, 16, der von der Bedieneinheit 11 an einen nicht näher dargestellten Zentralrechner der Maschine 10 übertragen wird, durch die Maschine 10 nur dann ausgeführt, wenn sich die Bedieneinheit 11 bei der Übertragung des Steuerbefehls in einem vorgegebenen Bedienbereich relativ zu der Maschine befindet. Je nach Größe und Komplexität der Maschine 10 kann hierbei eine Mehrzahl an vorgegebenen Bedienbereichen 30 ausgebildet sein. Jeder der Bedienbereiche 30 ist einer bestimmten Maschinenkomponente 13, 14, 15, 16 zugeordnet. Für die Entscheidung, ob der von der Maschine empfangene Steuerbefehl durch eine bestimmte Maschinenkomponente 13, 14, 15, 16 ausgeführt wird oder nicht, ist es daher erforderlich, den Ort der Bedieneinheit 11 und damit des Bedienbereichs im Moment der Übertragung des Steuerbefehls festzustellen. Hierdurch soll festgestellt werden, ob der Steuerbefehl aus dem, der zu bedienenden Maschinenkomponente 13, 14, 15, 16, zugeordneten Bedienbereich 30, abgegeben wurde. Dieser Vorgang ist auch als sog. "Teach-In" bekannt.

Für den Einlernvorgang wird den jeweiligen Maschinenkomponenten 13, 14, 15, 16 jeweils eine eindeutige Ortsinformation ID1, ID2, ID3, ID4 zugeordnet. Darüber hinaus werden die Grenzen der jeweiligen, den Maschinenkomponenten 13, 14, 15, 16 zugeordneten Bedienbereiche 30 festgelegt. Lediglich beispielhaft weisen diese, den Maschinenkomponenten 13, 14, 15, 16 zugeordneten Bedienbereiche 30 die Gestalt eines Trapezes auf. Prinzipiell kann die Gestalt der Bedienbereiche 30 abhängig von der Art bzw. dem Typ der Maschinenkomponente sowie den räumlichen Gegebenheiten festgelegt werden.

Zum Einlernen der Steuerung der Maschine wird für jeden der vorgegebenen Bedienbereiche 30 zumindest eine optische Information durch die Kamera der Bedieneinheit 11 erfasst. Eine jeweilige optische Information der betreffenden Maschinenkomponente 13, 14, 15, 16 ist mit dem Bezugszeichen 12 gekennzeichnet. Die optische Information kann beispielsweise durch einen sog. QR (Quick Response)-Code gebildet sein. Ein QR-Code ist ein zweidimensionaler Code, welcher zur Markierung von Baugruppen und Komponenten für die Logistik in der Automobilproduktion entwickelt wurde. Ein QR-Code besteht aus einer quadratischen Matrix aus schwarzen und weißen Punkten, die codierte Daten binär darstellen. Eine spezielle Markierung in drei der vier Ecken des Quadrats gibt die Orientierung vor. Der entsprechende Aufbau und die Funktionsweise von QR-Codes sind dem Fachmann hinlänglich bekannt, so dass auf eine eingehendere Beschreibung an dieser Stelle verzichtet wird.

Als optische Informationen könnten alternativ auch Merkmale der Maschine bzw. Maschinenkomponente und/oder von maschinenfremden Komponenten in der Umgebung der Maschine 10 verarbeitet werden. Dies könnten beispielsweise signifikante Kanten und/oder Flächen und dergleichen sein.

Im Rahmen der Erfassung der optischen Information 12 werden vorzugsweise mehrere Bilder 50 von der eindeutigen Ortsinformation ID1, ID2, ID3, ID4 einer jeweiligen Maschinenkomponente 13, 14, 15, 16 erfasst. Bevorzugt ist es, wenn zumindest zwei Bilder von vorgegebenen Referenzpunkten erzeugt werden. In FIG 1 sind drei Referenzpunkte 31, 32, 33 exemplarisch dargestellt, welche sich bevorzugt auf der Grenze des festgelegten Bedienbereichs 30 befinden. Befindet sich das Bediengerät mit der Kamera in Richtung der optischen Information, hier ID3, so ist der jeweilige durch die Kamera erfassbare Kameraerfassungsbereich mit den Bezugszeichen 34, 35 und 36 gekennzeichnet. Beispielhaft ist für die Maschinenkomponente 15 (das Vorgehen ist für die anderen Maschinenkomponenten identisch durchzuführen) und die beispielhaft drei Referenzpunkte 31, 32, 33 das jeweils erfasste Bild in den Figuren 2, 3 und 4 angegeben.

Der erste Referenzpunkt 31, welcher den geringsten Abstand des Bedienbereichs 30 zu der Maschinenkomponente 15 repräsentiert, erfasst die optische Information 12, welche die Ortsinformation ID3 repräsentiert, nahezu bildausfüllend. Das durch die Kamera erfasste Bild ist mit dem Bezugszeichen 50, das von dem Referenzpunkt 31 aufgenommene erste Bild mit dem Bezugszeichen 51 gekennzeichnet. Demgegenüber ist das zweite Bild 52, das vom zweiten Referenzpunkt 32 aufgenommen wurde, vom maximalen Abstand des Bedienbereichs zu der Maschinenkomponente 15 aufgenommen. Die optische Information 12, d.h. die Ortsinformation ID3, nimmt daher einen im Vergleich wesentlich kleineren Ausschnitt des Bildes 50 ein.

Das dritte Bild 53, das von dem Referenzpunkt 33 aufgenommen ist, erfasst die optische Information 12, d.h. die Ortsinformation ID3 der Maschinenkomponente 15, in einem Winkel, wobei der Referenzpunkt 33 ebenfalls - bezogen auf die Senkrechte zur Maschinenkomponente 15 - den größten Abstand zur Maschinenkomponente 15 aufweist. Hierdurch ergibt sich im Bild 50 eine leichte Verzerrung der optischen Information 12.

Diese lediglich beispielhaft drei aufgenommenen Bilder werden zusammen mit der zugeordneten Ortsinformation ID3 in einer Datenbank gespeichert. Darüber hinaus können in der Datenbank, zugeordnet zu der Ortsinformation ID3 bzw. der Maschinenkomponente 15 weitere Berechtigungen und Zusatzinformationen erfasst werden. Hierdurch wird ein digitales Abbild der Maschinenkomponente 15 eingelernt, welches zum späteren Abgleich von aktuellen Standortinformationen genutzt werden kann.

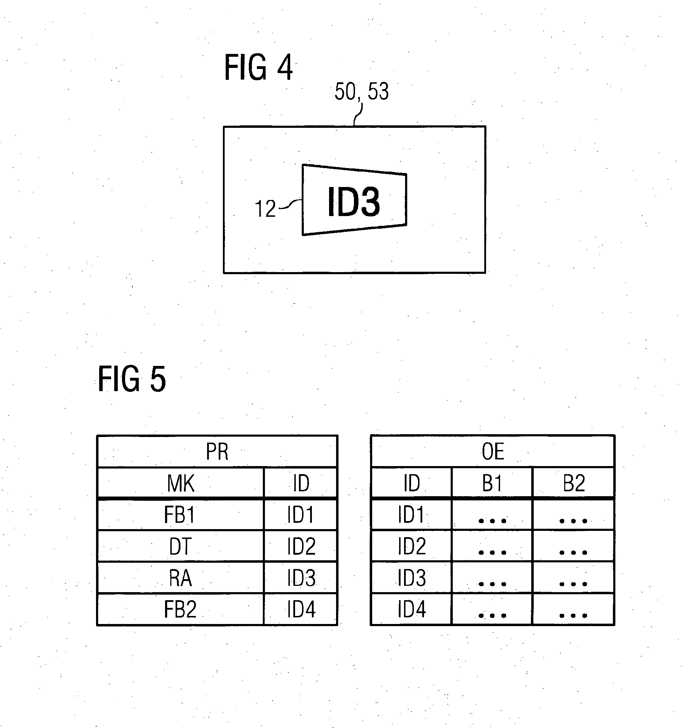

FIG 5 zeigt eine Tabelle, wie diese beispielsweise in der Datenbank nach dem optischen Erfassen der optischen Informationen aussehen könnte. Mit PR sind vorab erstellte Projektierungsdaten, welche eine Maschinenkomponente MK und einen Ortsinformationskennzeichner ID umfassen, vorgesehen. Beispielhaft ist ein Förderband FB1 dem Ortskennzeichner ID1, ein Drehteller DT dem Ortskennzeichner ID2, ein Roboterarm RA der Ortsinformation ID3 und ein weiteres Förderband FB2 der Ortsinformation ID4 zugeordnet. Mit OE sind die optischen Erfassungsdaten überschrieben, wobei diese den Ortsinformationskennzeichner ID und die während der Bilderfassung aufgenommenen Bilder B1 und B2 umfasst. Die Anzahl der Bilder kann prinzipiell wesentlich höher ausfallen. Eine Zuordnung der Projektierungsdaten PR zu den optischen Erfassungsdaten OE kann anhand der Ortsinformationskennzeichner ID erfolgen. Darüber hinaus können - wie bereits erläutert - in einzelnen Maschinenkomponenten weitere Bedienberechtigungen und Zusatzinformationen wie Stör- und Warnmeldungen zugeordnet sein.

Zur Steuerung der Maschine 10, nachfolgend beispielhaft der Maschinenkomponente 15, wird durch die Kamera der Bedieneinheit 11 zumindest ein Bild der Maschine 10 bzw. der Maschinenkomponente 15 erfasst. Dabei wird das erfasste Bild daraufhin analysiert, ob sich die optische Information 12, d.h. die Ortsinformation ID3, in den Bilddaten ermitteln lässt. Weist die Ortsinformation in dem ermittelten Bild eine Größe auf, welche zwischen der Größe der Ortsinformation des ersten Bildes 51 und der Größe der Ortsinformation 12 des zweiten Bildes 52 ist, so lässt sich hieraus schließen, dass sich die Bedieneinheit innerhalb des minimalen und maximalen Abstandes, d.h. innerhalb des Bedienbereichs 30, befindet. Wird die optische Information mit einer Verzerrung, wie in FIG 4 dargestellt, aufgenommen, so werden lediglich die Höhen des im zweidimensionalen Bild erscheinenden Trapezes ausgewertet, um festzustellen, ob sich die Bedieneinheit innerhalb des Bedienbereichs 30 befindet. Zudem kann anhand der optischen Information 12 festgestellt werden, welche Ortsinformation in dem Bild vorliegt, so dass nur die der Ortsinformation zugeordnete Maschinenkomponente, hier 15, durch die Bedieneinheit 11 steuerbar ist.

Vorzugsweise erfolgt die Bilderfassung durch die Kamera der Bedieneinheit 11 zyklisch, so dass auch Bewegungen des Bedieners mit der Bedieneinheit 11 erfasst werden können.

Insbesondere sicherheitsgerichtete Bedienfunktionen können nur dann ausgeführt werden, wenn sich die Bedieneinheit 11 in Sichtweise der optischen Information 12 befindet. Gegebenenfalls können während der Steuerung in der Datenbank enthaltene Zusatzinformationen zu der aktiv bedienten Maschinenkomponente eingeblendet werden.

Die in der Datenbank hinterlegten Informationen können auch dazu genutzt werden, den schnellsten Weg von einem Punkt A zu einem Punkt B zu finden, da die in der Datenbank vorliegenden Informationen zu einem dreidimensionalen Abbild der Maschine verarbeitet werden können.

Werden als optische Information 12 keine QR-Codes, sondern Merkmale der Maschine und/oder von maschinenfremden Komponenten verwendet, so ist es zweckmäßig, das Einlernen anhand von QR-Codes vorzunehmen, um in der Datenbank eine eindeutige und einfache Zuordnung zu ermöglichen (z. B. anhand einer ID auf dem QR-Code zum Anlagenteil in der Projektierung). Eine Orientierung nach dem Einlernen der Maschine kann dann anhand der Merkmale der Maschine und/oder der maschinenfremden Komponenten erfolgen. Ein Vorteil dieser Vorgehensweise besteht darin, dass die Merkmale der Maschine und/oder Umgebung nicht verschmutzen, verbleichen oder verstellt oder verloren gehen können. Darüber hinaus kann die Standortbestimmung genauer erfolgen, da nicht nur die Sichtweite und gegebenenfalls Größe des optischen Identifikators ermittelt wird, sondern auch der Betrachtungswinkel auf die Maschinenkomponente berücksichtigt werden kann. Hier ist insbesondere eine einfache Unterscheidung, ob die Bedieneinheit sich direkt oder seitlich vor der Anlage befindet, möglich.

Für die digitale Speicherung von Bildern sowie von Merkmalen der Maschine und/oder maschinennahen Umgebung lassen sich aus dem Stand der Technik bekannte Verfahren einsetzen. Beispielsweise sind diese in der Online-Enzyklopädie Wikipedia unter "Maschinelles Sehen" einsehbar. Ein häufig angewandtes Verfahren ist beispielsweise die Kantendetektion. Ein durch dieses Verfahren ermitteltes Bild kann in seinen Merkmalen reduziert werden, so dass es nur noch optische Anomalien der Maschine enthält und als Referenz für die Identifikation des Standortes eines Bedieners verwendet werden kann. Verfahren für die anschließende Merkmalsreduktion sind beispielsweise die bekannte Varianz- oder Diskriminanz-Anlayse.

## Patentansprüche

1. Verfahren zum Einlernen der Steuerung einer Maschine (10) und zur Steuerung dieser Maschine (10) wobei die Steuerung mittels einer Bedieneinheit (11) erfolgt, wobei
- die Maschine (10) eine Anzahl an Maschinenkomponenten (13, 14, 15, 16) aufweist;
- der Anzahl an Maschinenkomponenten (13, 14, 15, 16) jeweils eine eindeutige Ortsinformation (ID1, ID2, ID3, ID4) und ein Bedienbereich (30) zugeordnet ist, wobei ein Steuerbefehl, der von der Bedieneinheit (11) an die Maschine (10) übertragen wird, durch die Maschinenkomponente (13, 14, 15, 16) ausgeführt wird, wenn sich die Bedieneinheit (11) bei der Übertragung des Steuerbefehls in dem Bedienbereich (30) befindet;
bei dem zum Einlernen
- für jeden der vorgegebenen Bedienbereiche zumindest eine optische Information (12) durch die Bedieneinheit (11) erfasst wird, indem mit einer Kamera des Bediengeräts (12) ein oder mehrere Bilder (50) aufgenommen werden;
- die zumindest eine erfasste optische Information (12) zusammen mit der zugeordneten Ortsinformation (ID1, ID2, ID3, ID4) in einer Datenbank gespeichert wird, wobei die erfasste optische Information (12) einen Identifikationsparameter für die zugeordnete Maschinenkomponente (13, 14, 15, 16) ausbildet;
und
- zur Steuerung der Maschine (10) durch die Bedieneinheit (11) in zyklischen Abständen ein Bild (50) der Maschine (10) erfasst wird, wobei das Bild (50) verarbeitet wird, um eine der optischen Informationen zu ermitteln, und wobei anhand der ermittelten optischen Information (12) die Ortsinformation (ID1, ID2, ID3, ID4) und die zugeordnete Maschinenkomponente (13, 14, 15, 16) ermittelt wird.

2. Verfahren nach einem der vorhergehenden Ansprüche, bei dem der Schritt des Erfassens der zumindest einen optischen Information (12) von zumindest einem Referenzpunkt (31, 32, 33) erfolgt.

3. Verfahren nach Anspruch 2, bei dem an zumindest zwei Referenzpunkten das oder die Bilder (50) mit der Bedieneinheit (11) aufgenommen werden.

4. Verfahren nach Anspruch 2 oder 3, bei dem ein jeweiliger Referenzpunkt (31, 32, 33) auf einer Grenze des Bedienbereichs (30) liegt.

5. Verfahren nach einem der Ansprüche 2 bis 4, bei dem ein erstes Bild (51) von einem ersten Referenzpunkt (31), der einem minimalen Bedienabstand des Bedienbereichs (30) repräsentiert, und ein zweites Bild (52) von einem zweiten Referenzpunkt (32), der einen maximalen Bedienabstand des Bedienbereichs (30) repräsentiert, aufgenommen wird.

6. Verfahren nach einem der vorhergehenden Ansprüche, bei dem als optische Information (12) ein QR-Code verarbeitet wird, der an der Maschine (10) oder in der Nähe der Maschine (10) angebracht ist.

7. Verfahren nach einem der vorhergehenden Ansprüche, bei dem als optische Information (12) ein oder mehrere Merkmale der Maschine (10) oder von Maschinenfremden Komponenten in der Umgebung der Maschine (10) verarbeitet werden.

8. Verfahren nach einem der vorhergehenden Ansprüchen, bei dem die Verarbeitung des zumindest einen Bildes durch die Bedieneinheit (11) erfolgt.

9. Verfahren nach einem der vorhergehenden Ansprüchen, bei dem das zumindest eine Bild (50) zur Verarbeitung an einen Zentralrechner der Maschine (10) übertragen wird.

## Claims

1. Method for teaching the controller of a machine (10) and for controlling said machine (10), wherein the machine is controlled by means of an operating unit (11), wherein
- the machine (10) has a number of machine components (13, 14, 15, 16);
- the number of machine components (13, 14, 15, 16) are each assigned unique location information (ID1, ID2, ID3, ID4) and an operating area (30), wherein a control command which is transmitted from the operating unit (11) to the machine (10) is executed by the machine components (13, 14, 15, 16) if the operating unit (11) is located in the operating area (30) during the transmission of the control command;
in which for teaching,
- at least one item of optical information (12) is captured by the operating unit (11) for each of the predetermined operating areas, in that one or more images (50) are recorded with a camera of the operating device (12);
- the at least one item of captured optical information (12) is stored together with the assigned location information (ID1, ID2, ID3, ID4) in a database, wherein the captured optical information (12) forms an identification parameter for the assigned machine component (13, 14, 15, 16);
and
- for control of the machine (10) by the operating unit (11), an image (50) of the machine (10) is captured at cyclic intervals, wherein the image (50) is processed in order to determine one of the items of optical information, and wherein the location information (ID1, ID2, ID3, ID4) and the assigned machine component (13, 14, 15, 16) are determined on the basis of the optical information (12).

2. Method according to one of the preceding claims, in which the step of capturing the at least one item of optical information (12) is performed from at least one reference point (31, 32, 33).

3. Method according to claim 2, in which the image or images (50) is or are captured at at least two reference points with the operating unit (11).

4. Method according to claim 2 or 3, in which a respective reference point (31, 32, 33) lies on a boundary of the operating area (30).

5. Method according to one of claims 2 to 4, in which a first image (51) is recorded from a first reference point (31), which represents a minimum control distance of the operating area (30), and a second image (52) is recorded from a second reference point (32), which represents a maximum control distance of the operating area (30).

6. Method according to one of the preceding claims, in which a QR code which is attached to the machine (10) or in the vicinity of the machine (10) is processed as the item of optical information (12).

7. Method according to one of the preceding claims, in which one or more features of the machine (10) or of non-machine components in the vicinity of the machine (10) are processed as the item of optical information (12).

8. Method according to one of the preceding claims, in which the at least one image is processed by the operating unit (11).

9. Method according to one of the preceding claims, in which the at least one image (50) is transmitted to a central processor of the machine (10) for processing.

## Revendications

1. Procédé d'apprentissage de la commande d'une machine ( 10 ) et de commande de cette machine ( 10 ), dans lequel la commande s'effectue au moyen d'une unité ( 11 ) de commande, dans lequel
- la machine ( 10 ) a un certain nombre de composants ( 13, 14, 15, 16 ) de machine ;
- au nombre de composants ( 13, 14, 15, 16 ) de machine, est associée respectivement une information ( ID1, ID2, ID3, ID4 ) de localisation univoque et une plage ( 30 ) de commande, une instruction de commande transmise par l'unité ( 11 ) de commande à la machine ( 10 ) étant exécutée par les composants ( 13, 14, 15, 16 ) de la machine, si l'unité ( 11 ) de commande se trouve, lors de la transmission de l'instruction de commande, dans la plage ( 30 ) de commande ;
dans lequel, pour l'apprentissage
- pour chacune des plages de commande données à l'avance, au moins une information ( 12 ) optique est détectée par l'unité ( 11 ) de commande, en prenant une ou plusieurs images ( 50 ) par une caméra de l'appareil ( 12 ) de commande ;
- la au moins une information ( 12 ) optique détectée est, ensemble avec les informations ( ID1, ID2, ID3, ID4 ) de localisation associée, mémorisée dans une base de données, l'information ( 12 ) optique détectée constituant un paramètre d'identification du composant ( 13, 14, 15, 16 ) de machine associée ;
et
- pour commander la machine ( 10 ) par l'unité ( 11 ) de commande, on détecte une image ( 50 ) de la machine, l'image ( 50 ) étant traitée pour déterminer l'une des informations optiques, et dans lequel, au moyen de l'information ( 12 ) optique détectée, on détermine l'information ( ID1, ID2, ID3, ID4 ) de localisation et le composant ( 13, 14, 15, 16 ) de machine associée.

2. Procédé suivant l'une des revendications précédentes, dans lequel on effectue le stade de détection de la au moins une information ( 12 ) optique d'au moins un point ( 31, 32, 33 ) de référence.

3. Procédé suivant la revendication 2, dans lequel on prend l'image ou les images ( 50 ) par l'unité ( 11 ) de commande en au moins deux points de référence.

4. Procédé suivant la revendication 2 ou 3, dans lequel un point ( 31, 32, 33 ) de référence respectif se trouve à une limite de la zone ( 30 ) de commande.

5. Procédé suivant l'une des revendications 2 à 4, dans lequel on prend une première image ( 51 ) d'un premier point ( 31 ) de référence, qui représente une distance minimum de commande de la plage ( 30 ) de commande et une deuxième image ( 52 ) d'un deuxième point ( 32 ) de référence, qui représente une distance de commande maximum de la plage ( 30 ) de commande.

6. Procédé suivant l'une des revendications précédentes, dans lequel on traite comme information ( 12 ) optique un code QR, qui est mis sur la machine ( 10 ) ou à proximité de la machine ( 10 ).

7. Procédé suivant l'une des revendications précédentes, dans lequel on traite comme information ( 12 ) optique une caractéristique ou plusieurs caractéristiques de la machine ( 10 ) ou de composants étrangers à la machine se trouvant alentour de la machine ( 10 ).

8. Procédé suivant l'une des revendications précédentes, dans lequel on effectue le traitement de la au moins une image par l'unité ( 11 ) de commande.

9. Procédé suivant l'une des revendications précédentes, dans lequel on transmet la au moins une image ( 50 ) pour le traitement à un ordinateur central de la machine ( 10 ).
